# EUROPEAN PATENT APPLICATION

(11) **EP 4 831 799 A1**
(43) Date of publication of application: **28.10.2026**
(21) Application number: 24906552.5
(22) Date of filing: 20.12.2024
(51) Int. Cl.: G06F 9/448

(54) **CONTROL METHOD AND APPARATUS FOR AUTOMATED PROCESS, ELECTRONIC DEVICE, AND STORAGE MEDIUM**

(30) Priority: 22.12.2023 CN 202311778360; 22.12.2023 CN 202311778741
(71) Applicant: Megarobo Technologies Co., Ltd., Beijing 102208 (CN)
(72) Inventor: SUN, Fei, Beijing 102208 (CN)
(74) Representative: Grünecker Patent- und Rechtsanwälte PartG mbB
(86) International application number: PCT/CN2024/141047
(87) International publication number: WO 2025/131080

(57) **Abstract**

Embodiments of the present application provide a control method and apparatus for an automated process, an electronic device, and a storage medium. The method comprises: acquiring an ordered operation group of an automated process, the ordered operation group being obtained on the basis of the connection relationship between various nodes in the automated process, the ordered operation group comprising a plurality of ordered sub-operations, the types of the sub-operations comprising a main operation and an auxiliary operation other than the main operation, and the main operation being an operation corresponding to the main function of a device corresponding to a device node; for the ordered operation group, determining all main operations in the ordered operation group; and determining, on the basis of the ordered operation group, an auxiliary operation corresponding to each main operation, and using the main operation and the corresponding auxiliary operation as an operation set, the correspondence relationship between the main operation and the auxiliary operation being determined on the basis of a device attribute corresponding to the main operation.

## Description

This application claims the priority to Chinese Patent Application No. 202311778360.X, titled "CONTROL METHOD AND APPARATUS FOR AUTOMATED PROCESS, ELECTRONIC DEVICE, AND STORAGE MEDIUM", filed on December 22, 2023 with the China National Intellectual Property Administration, and to Chinese Patent Application No. 202311778741.8, titled "SUB-OPERATION GROUPING METHOD AND APPARATUS IN AUTOMATED PROCESS, AND CONTROL METHOD AND APPARATUS", filed on December 22, 2023 with the China National Intellectual Property Administration, both of which are incorporated herein by reference in their entireties.

### FIELD

The present disclosure relates to the field of automation, and more particularly, to a method for controlling an automated process, an apparatus for controlling an automated process, an electronic device, and a storage medium.

### BACKGROUND

At present, many fields are undergoing continuous automation transformation to reduce manpower requirements and improve efficiency. Automation systems are widely used in automated manufacturing, automated inspection, and automated testing or experimentation. Taking a laboratory automation system as an example, the automation system may include multiple devices, and users build corresponding automated processes with the automation system to achieve testing/experimental objectives. Generally, an automated process may include multiple flow nodes, each node corresponding to one device, and one device generally corresponds to multiple operations. For example, an automated process may include the following nodes: a consumable (such as a well plate) node (corresponding to a start position) → a first device node (such as a liquid workstation) → a second device node (such as an incubator) → an end node (the final destination of the consumable, corresponding to an end position). For example, the first device node corresponds to a device such as the liquid workstation, and corresponds to multiple operations, namely, four operations of door opening, internal transfer within the liquid workstation, door closing, and liquid transfer.

Before the automation system runs, the automated process is parsed into an operation sequence. Generally, a node may be parsed into multiple operations, and the multiple operations are defined as pre-operations, primary operations, and post-operations according to the main function of the device. As the names suggest, the primary operation is the main operation performed by the device. For example, since the main function of the liquid workstation is liquid transfer, the liquid transfer operation is the primary operation. The operations before the liquid transfer operation may be defined as pre-operations, and similarly, the operations after the liquid transfer operation may be defined as post-operations. During the execution of an automated process, pre-operations, primary operations, and post-operations are usually regarded as individuals. However, in some scenarios, it is required to regard these operations as a whole to implement related functions. For example, for a scenario where a process is to be terminated during execution, it is to plan a path for transfer the consumable to a specified position. A common practice is to directly delete the remaining unexecuted steps and add steps to go to the specified position. This approach is relatively inefficient due to the need for deletion and re-addition, and for complex automated processes, this drawback is particularly evident.

### SUMMARY

In view of the issues described above, the present disclosure is provided. In accordance with a first aspect of the present disclosure, a method for controlling an automated process is provided. The automated process includes a start node, an intermediate node, and an end node that are sequentially connected, the start node represents a position of a sample before the automated process starts, the end node represents a position of the sample after the automated process ends, the intermediate node includes a device node and represents a position where the sample undergoes a related operation between the start position and the end position. The method includes: acquiring an ordered series of operations of the automated process, wherein the ordered series of operations is acquired according to connections among the nodes in the automated process, the ordered series of operations includes a plurality of ordered sub-operations, the plurality of sub-operations are categorized into a type of primary operation and a type of auxiliary operation other than the primary operation, and the type of primary operation includes an operation that corresponds a primary function of a device corresponding to the device node; determining each primary operation in the ordered series of operations based on the ordered series of operations; for each primary operation, determining every auxiliary operation corresponding to the primary operation based on the ordered series of operations, and grouping the primary operation and the auxiliary operation corresponding to the primary operation into an operation set, wherein a correspondence between the primary operation and the auxiliary operation is determined according to an attribute of a device which corresponds to the primary operation; and controlling an execution of the automated process based on the determined one or more operation sets.

In an embodiment, the type of auxiliary operation includes a pre-operation executed before the primary operation corresponding to the auxiliary operation and a post-operation executed after the primary operation corresponding to the auxiliary operation, wherein the pre-operation or the post-operation includes an inter-device transfer operation and/or a commutating operation for adjusting a direction of a consumable, and the consumable refers to a container for holding a sample;
in response to a quantity of the primary operation in the ordered series of operations being more than one, before the controlling an execution of the automated process based on the determined one or more operation sets, the method further including:
for two adjacent operation sets, determining each commutating operation and each inter-device transfer operation in a second operation set of the two adjacent operation sets; taking the commutating operation as a shared operation of a first operation set of the two adjacent operation sets and the second operation set in response to the transfer operation being the pre-operation, and taking the commutating operation as a shared operation of the first operation set and the second operation set in response to the commutating operation being the pre-operation, wherein the first operation set is executed before the second operation set.

In an embodiment, the determining, for each primary operation, every auxiliary operation corresponding to the primary operation based on the ordered series of operations, and grouping the primary operation and the auxiliary operation corresponding to the primary operation into an operation set includes:
determining, based on the ordered series of operations, an order of one or more primary operations in the ordered series of operations to obtain an ordered primary operation sequence;
by taking each of the one or more primary operations as basis, grouping the sub-operations in the ordered series of operations to form one or more operation groups;
traversing each operation group, determining an intersection between sub-operations in a current operation group and the ordered primary operation sequence;
determining, in response to the intersection being non-empty, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation.

In an embodiment, the by taking each of the one or more primary operations as basis, grouping the sub-operations in the ordered series of operations to form one or more operation groups includes:
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

In an embodiment, the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" includes:
deleting, for each primary operation in the ordered series of operations, a sequential relationship between the primary operation and a next sub-operation connected to the primary operation;
setting an initial operation number for each of the plurality of sub-operations in the ordered series of operations, and setting an operation group number of a current operation group to an initial value;
creating a stack and initializing the stack to be empty;
traversing each of the plurality of sub-operations in the ordered series of operations, and in response to an operation number of a current sub-operation being the initial operation number, performing:
   modifying the current operation group number to a target value; and pushing the current sub-operation onto the stack;
   executing, in response to determining that the stack is not empty, a popping step and a pushing step, wherein
      the popping step refers to: popping a sub-operation at a top of the stack, and setting the operation number of the sub-operation to the target value in response to the operation number of the sub-operation being the initial operation number; and
      the pushing step refers to: acquiring an adjacent sub-operation of the sub-operation at the top of the stack, and pushing the adjacent sub-operation onto the stack in response to an operation number of the adjacent sub-operation being the initial operation number;
   determining whether the stack is empty, and repeating the popping step and the pushing step until it is determined that the stack is empty; and
   determining, in response to determining that the stack is empty, whether the traversing is completed, and in response to the traversing not being completed, traversing a next sub-operation in the ordered series of operations until all sub-operations are grouped.

In an embodiment, the in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation, includes:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
   in response to a sub-operation in the current operation group being a primary operation, determining that the sub-operation being the primary operation belongs to another operation set; and
   in response to a sub-operation in the current operation group being an auxiliary operation, determining whether the auxiliary operation belongs to the same operation set as the primary operation in the intersection based on a correspondence between the auxiliary operation and a previous primary operation.

In an embodiment, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

In an embodiment, it is determined that all sub-operations in the current operation group belong to a last operation set in response to the intersection being empty.

In an embodiment, the start node corresponds to a plurality of samples, before the determining each primary operation in the ordered series of operations based on the ordered series of operations, the method includes: determining per-sample ordered series of operations, based on the ordered series of operations; and
the determining each primary operation in the ordered series of operations based on the ordered series of operations includes: determining, based on the determined per-sample ordered series of operations, each primary operation in each of the per-sample ordered series of operations.

In an embodiment, it is determined that all of the plurality of sub-operations in the ordered series of operations belong to the same operation set, in response to a quantity of the primary operation in the ordered series of operations being one.

In accordance with a second aspect of the present disclosure, an apparatus for controlling an automated process is provided. The automated process includes a start node, an intermediate node, and an end node that are sequentially connected, the start node represents a position of a sample before the automated process starts, the end node represents a position of the sample after the automated process ends, the intermediate node includes a device node and represents a position where the sample undergoes a related operation between the start position and the end position. The apparatus includes: an acquisition module, configured to acquire an ordered series of operations of the automated process, wherein the ordered series of operations is acquired according to connections among multiple nodes in the automated process, the ordered series of operations includes a plurality of ordered sub-operations, the plurality of sub-operations are categorized into a type of primary operation and a type of auxiliary operation other than the primary operation, and the type of primary operation includes an operation that corresponds a primary function of a device corresponding to the device node; a first determination module, configured to determine each primary operation in the ordered series of operations based on the ordered series of operations; a second determination module, configured to determine, for each primary operation, every auxiliary operation corresponding to the primary operation based on the ordered series of operations, and group the primary operation and the auxiliary operation corresponding to the primary operation into an operation set, wherein a correspondence between the primary operation and the auxiliary operation is determined according to an attribute of a device which corresponds to the primary operation; and a control module, configured to control an execution of the automated process based on the determined one or more operation sets.

In accordance with a third aspect of the present disclosure, an electronic device is provided, including a processor and a memory, wherein the memory stores computer program instructions, and the computer program instructions, when executed by the processor, implement any of the foregoing method for controlling an automated process.

In accordance with a fourth aspect of the present disclosure, a storage medium is provided. The storage medium stores program instructions, and the program instructions, when executed, implement any of the foregoing method for controlling an automated process.

In the above technical solution, in practical application scenarios (for example, a process termination scenario), by processing and controlling the process using the method for controlling an automated process provided by the present disclosure, processing efficiency can be effectively improved. Specifically, during the execution of an automated process, when a "terminate" command is required to be executed for the automated process, the method for controlling an automated process provided by the present disclosure is first used to group sub-operations, so as to form multiple operation sets (it can be understood that one operation set corresponds to one group). Subsequently, the corresponding operation sets are regarded as a whole for considering subsequent related issues or steps. Compared to a method of deleting remaining unexecuted sub-operations and adding operations to go to a specified position, when applied to special application scenarios (for example, process termination), the method for controlling an automated process according to the present disclosure is more efficient and has strong reusability, and such advantages are particularly evident for complex automated processes.

The above description is merely an overview of the technical solutions according to the present disclosure. To enable a clearer understanding of the technical solutions according to the present disclosure, implement the technical solutions based on the content of the specification, and make the above and other objectives, features, and advantages of the present disclosure more apparent and comprehensible, specific embodiments of the present disclosure are explicitly described below.

### BRIEF DESCRIPTION OF THE DRAWINGS

The embodiments of the present disclosure are described in more detail with reference to the drawings, and the above and other objects, features and advantages of the present disclosure will become more apparent. The drawings are provided for further understanding of the embodiments of the present disclosure and constitute a part of the specification. Together with the embodiments of the present disclosure, the drawings serve to explain the present disclosure, but do not impose any limitation on the present disclosure. In the drawings, same reference numerals generally represent same parts or steps.
FIG. 1 shows a schematic flowchart of an automated process according to an embodiment of the present disclosure;
FIG. 2 shows a schematic flowchart of a method for controlling an automated process according to an embodiment of the present disclosure;
FIG. 3 shows a schematic diagram of an ordered series of operations acquired according to connections among multiple nodes in the automated process corresponding to the embodiment in FIG. 1;
FIG. 4 shows a schematic diagram of a grouping result based on the ordered series of operations shown in FIG. 3;
FIG. 5 shows a flowchart of determining an ordered primary operation sequence according to an embodiment of the present disclosure;
FIG. 6 shows a schematic logic diagram of a method for controlling an automated process according to an embodiment of the present disclosure;
FIG. 7 shows a schematic diagram of an ordered series of operations acquired according to connections among multiple nodes in an automated process according to another embodiment of the present disclosure;
FIG. 8 shows a schematic block diagram of an apparatus for grouping sub-operations in an automated process according to an embodiment of the present disclosure; and
FIG. 9 shows a schematic block diagram of an electronic device according to an embodiment of the present disclosure.

### DETAILED DESCRIPTION

To make the objectives, technical solutions, and advantages of the present disclosure more apparent, exemplary embodiments according to the present disclosure will be described in detail below with reference to the drawings. Apparently, the described embodiments are only part of the embodiments of the present disclosure, not all embodiments. It should be understood that the present disclosure is not limited by the exemplary embodiments described herein. Based on the embodiments of the present disclosure described herein, all other embodiments obtained by those skilled in the art without any creative effort shall fall within the scope of the present disclosure.

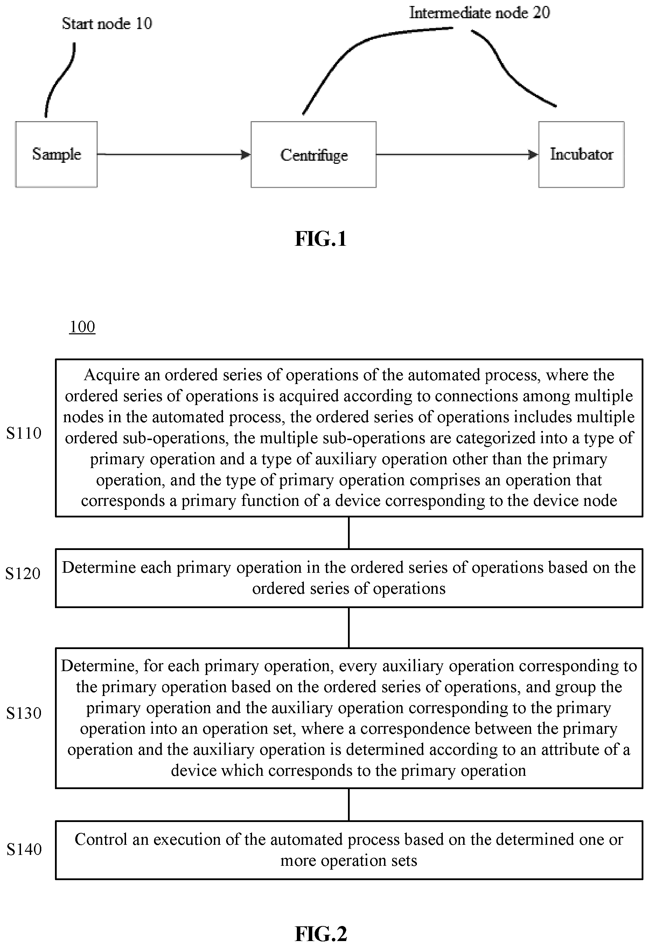

To at least partially address the above issues, a method for controlling an automated process is provided in the embodiment of the present disclosure. The method for controlling an automated process may be applied in an apparatus for controlling an automated process. The automated process includes a start node, an intermediate node, and an end node that are sequentially connected. That is, the automated process includes multiple sequentially connected nodes. For example, FIG. 1 shows a schematic flowchart of an automated process according to an embodiment of the present disclosure. In FIG. 1, reference numeral 10 represents a start node, and reference numeral 20 represents an intermediate node. Since an end node is generally omitted when building an automated process, the end node is not shown in FIG. 1. The start node represents a position of a sample before the automated process starts, the end node represents a position of the sample after the automated process ends, and the intermediate node includes a device node and represents a position where the sample undergoes a related operation between the start position and the end position. It can be understood that a quantity of the intermediate node may be more than one. For example, both the centrifuge (device node) and the incubator (device node) in FIG. 1 may be regarded as intermediate nodes. When a sample is transferred to the device corresponding to the centrifuge node, related centrifugation operations are performed. Similarly, when the sample is transferred to the incubator, incubation operations are performed. The connecting lines between nodes may be understood as transfer operations. For example, the line between the start node and the node corresponding to the centrifuge indicates that the sample is required to be transferred from the start position to the centrifuge.

FIG. 2 shows a schematic flowchart of a method 100 for controlling an automated process according to an embodiment of the present disclosure. As shown in FIG. 2, the method 100 may include steps S110, S120, S130, and S140.

In step S110, an ordered series of operations of the automated process is acquired, where the ordered series of operations is acquired according to connections among the nodes in the automated process, the ordered series of operations includes multiple ordered sub-operations, the multiple sub-operations are categorized into a type of primary operation and a type of auxiliary operation other than the primary operation, and the type of primary operation includes an operation that corresponds a primary function of a device corresponding to the device node.

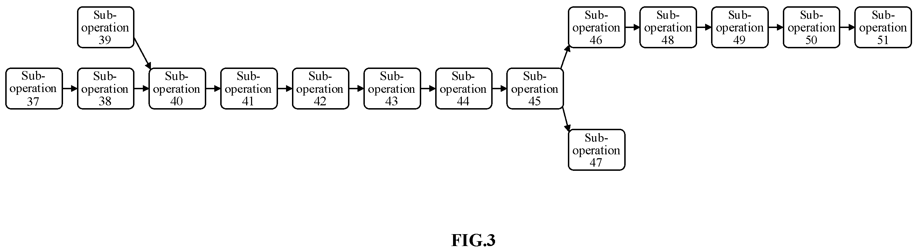

The ordered series of operations, as the name suggests, includes operations that are ordered; or more specifically, the execution time instants of the sub-operations are ordered. In an embodiment, after a user builds an automated process as shown in FIG. 1, a process parsing is carried out according to the connections among nodes in the automated process, to obtain the ordered series of operations. The ordered series of operations includes multiple ordered sub-operations, among which sub-operations positioned earlier are executed first, and sub-operations positioned later are executed later. FIG. 3 shows an ordered series of operations acquired according to connections among the nodes of the automated process in FIG. 1. The arrow directions and the positional sequence of sub-operations indicate the execution order of the sub-operations. It can be understood that the sub-operations in the ordered series of operations are the smallest units of operations.

Exemplarily, for some application scenarios, the ordered series of operations may be acquired according to the connections among the nodes and some special requirements arising during execution. For example, during process execution, when a liquid workstation lacks pipette tip for liquid transfer, operations related to the pipette tip loading need to be inserted, thereby acquiring the ordered series of operations.

In step S110, the sub-operations are categorized into a type of primary operation and a type of auxiliary operation other than the primary operation. A primary operation of a respective node (device node) refers to an operation that corresponds to a primary function of a device corresponding to the respective node. It can be understood an ordered series of operations includes two types of sub-operations: one is primary operation, and the other is auxiliary operation. The primary operation refers to an operation that corresponds to a primary function of a device corresponding to the respective node. For example, the primary function of a centrifuge is centrifugation, so the centrifugation operation is a primary operation. For example, referring to FIG. 3, the ordered series of operations in FIG. 3 corresponds to the automated process shown in FIG. 1, with the primary function of transferring a sample to the centrifuge for centrifugation and then to the incubator for incubation. In the ordered series of operations shown in FIG. 3, since the flowchart in FIG. 1 corresponds to two device nodes, two corresponding primary operations are included in the ordered series of operations, namely, sub-operation 42 and sub-operation 49. Sub-operation 42 is a centrifugation operation, and sub-operation 49 is an incubation operation. For sub-operation 37 (centrifuge rotation operation for rotating into position before centrifugation), sub-operation 38 (centrifuge door opening operation), sub-operation 39 (robotic arm 1 transferring the sample to an intermediate position), sub-operation 40 (robotic arm 2 transferring the sample from the intermediate position into the centrifuge), sub-operation 41 (centrifuge door closing operation), sub-operation 43 (centrifuge rotation operation for rotating into position after centrifugation), sub-operation 44 (centrifuge door opening operation), sub-operation 45 (transferring operation by robotic arm 2, that is, the robotic arm transferring the sample from the centrifuge to an intermediate position), sub-operation 46 (robotic arm 1 transferring the sample from the intermediate position into the incubator), sub-operation 47 (centrifuge door closing operation), sub-operation 48 (internal transfer of the sample to an incubation station within the incubator), sub-operation 50 (internal transfer of the sample to the incubator exit within the incubator), and sub-operation 51 (robotic arm 1 transferring the sample away from the incubator), they are all auxiliary operations.

Exemplarily, auxiliary operations may include pre-operation(s) executed before a corresponding primary operation and post-operation(s) executed after the corresponding primary operation. The pre-operation or the post-operation includes an inter-device transfer operation (robotic arm transferring). Reference is made to FIG. 3. Sub-operation 42 is a primary operation; auxiliary operations including sub-operations 37, 38, 39, 40, and 41 before this primary operation are all pre-operations to the primary operation 42; and similarly, sub-operations 43, 44, and 47 after this sub-operation 42 (primary operation) are post-operations to this primary operation. Sub-operation 49 is a primary operation; sub-operations 45, 46, and 48 before this primary operation are all pre-operations to the primary operation 49; and sub-operations 50 and 51 after this primary operation are post-operations to this primary operation. It should be noted that the correspondence between a primary operation and an auxiliary operation is determined according to an attribute of the device which corresponds to the primary operation. Not all sub-operations located before a primary operation are auxiliary operations for the primary operation. For example, sub-operation 47 represents centrifuge door closing, so sub-operation 47 is a post-operation to the primary operation corresponding to sub-operation 42, but not a pre-operation to the primary operation corresponding to sub-operation 49. The correspondence between the primary operation and the auxiliary operation will be described in detail below.

Exemplarily, in some application scenarios, due to requirements on the orientation of a consumable before and after transferring, the orientation of the consumable (which is the container for holding the sample) is adjusted during transferring through a commutator. In an embodiment, for example, a robotic arm 1 transfers the sample to the commutator, the commutator rotates for orientation change, and then a robotic arm 2 transfers the sample to a specified position. If the distance permits, robotic arm 1 can transfer the sample to the specified position without robot arm 2. In this regard, the commutating operation is also an auxiliary operation. According to the position of the commutating operation in the ordered series of operations and the correspondence between the commutating operation and the primary operation, the commutating operation may be a pre-operation or a post-operation. Similarly, robotic arm transferring, that is, transfer operation, may be a pre-operation or a post-operation according to the position of the transfer operation in the ordered series of operations.

In step S120, each primary operation in the ordered series of operations is determined based on the ordered series of operations.

Exemplarily, before building an automated process, a user performs device attribute configuration, which includes configuring the primary operation(s) of a device and pre-operation(s) and post-operation(s) to the primary operation (for example, according to the device attribute of a centrifuge, rotation into position and centrifuge door opening are required before centrifugation, so pre-operations for the centrifugation operation is required to be configured, such as sub-operation 37 and sub-operation 38 described above). In this way, matching can be performed, for example through IDs (or in other ways). And then, based on the corresponding ID, it can be determined which operation is a primary operation, which sub-operation is a pre-operation to the primary operation and which sub-operation is a post-operation to the primary operation, thus establishing a correspondence between the primary operation and the corresponding auxiliary operation (pre-operation and/or post-operation). In an embodiment, each device has a primary command and several pre-operation commands and post-operation commands. The primary command is identified by an IsMainCommand attribute, and the pre-operation commands and post-operation commands are associated with their corresponding primary command through a MainDeviceCommandId attribute. This information is attached to the process when the process is built. During process parsing, each sub-operation is assigned with an ID (for example, an integer-type ID). Subsequently, the correspondence between the primary operation and the pre-operation and the post-operation to the primary operation can be determined according to the MainDeviceCommandId attribute of each sub-operation. In an embodiment, taking the incubator as an example, during process parsing, an ID (such as 2) is assigned to each of the primary operation Incubate, the pre-operation PlateIn, and the post-operation PlateOut. In this way, with the MainDeviceCommandId, it can be determined that the primary operation Incubate has a correspondence with the pre-operation PlateIn and the post-operation PlateOut.

In step S130, for each primary operation, every auxiliary operation corresponding to the primary operation is determined based on the ordered series of operations, and the primary operation and the auxiliary operation corresponding to the primary operation are grouped into an operation set, where a correspondence between the primary operation and the auxiliary operation is determined according to an attribute of a device which corresponds to the primary operation.

Exemplarily, as shown in FIG. 3, and in conjunction with the above description, it can be determined, based on the pre-established correspondence between the primary operation and the auxiliary operation, that the primary operation 42 correspond to auxiliary operations including sub-operations 37, 38, 39, 40, 41, 43, 44, and 47. Hence, sub-operations 37, 38, 39, 40, 41, 43, 44, and 47 are grouped into one operation set. Similarly, primary operation 49 and the auxiliary operations corresponding to primary operation 49 are grouped into another operation set, namely, sub-operations 45, 46, 48, 49, 50, and 51 are grouped into another operation set.

In step S140, an execution of the automated process is controlled based on the determined one or more operation sets.

Exemplarily, in the embodiment corresponding to FIG. 3, two operation sets are determined. Thus, in corresponding scenarios or under corresponding requirements, the execution of the automated process can be controlled by regarding each operation set as a whole based on the determined one or more operation sets.

In the above technical solution, in practical application scenarios (for example, a process termination scenario), by processing and controlling the process using the method for controlling an automated process provided by the present disclosure, processing efficiency can be effectively improved. In an embodiment, during the execution of an automated process, when a "terminate" command is to be executed for the automated process, the method for controlling an automated process provided by the present disclosure is used to group sub-operations, so as to form multiple operation sets (it can be understood that one operation set corresponds to one group). Subsequently, the corresponding operation sets are regarded as a whole for considering subsequent related issues or steps. Exemplarily, reference is made to the embodiment corresponding to FIG. 3. It is assumed that the automated process is required to be terminated during the incubation process in the incubator, since the incubation operation of the incubator corresponds to the second operation set, the second operation set is considered as a whole. Since the process is terminated during the incubation operation, after the incubation operation ends, it is required to go through the steps of internal transfer of the sample to the exit within the incubator (sub-operation 50) and robotic arm transferring (sub-operation 51) before the sample is transferred to a specified position (a pre-determined placement position for the sample when the process is terminated). By contrast, in the scenario of terminating during the incubation operation, if the method for controlling an automated process provided by the present disclosure is not adopted to group sub-operations first, but instead an approach of deleting remaining unexecuted sub-operations and adding steps to go to the specified position is adopted, apparently the approach is time-consuming (because it requires deletion and re-addition). Especially for some more complex automated processes, the drawback of being time-consuming and inefficient is particularly evident. Therefore, handling special application scenarios (for example, process termination) with the method for controlling an automated process provided by the present disclosure is more efficient and has strong reusability. This advantage is particularly evident for complex automated processes. In addition, the accuracy and continuity of sub-operations can be ensured by implementing solution of the present disclosure. The approach of deletion and re-addition involves deletion of some auxiliary sub-operations and therefore brakes the continuity of process execution.

Exemplarily, in response to a quantity of the primary operation in the ordered series of operations being more than one, before the controlling an execution of the automated process based on the determined one or more operation sets, the method further includes step S150.

In step S150, for two adjacent operation sets, each commutating operation and each inter-device transfer operation in a second operation set of the two adjacent operation sets are determined; the commutating operation is taken as a shared operation of a first operation set of the two adjacent operation sets and the second operation set in response to the transfer operation being the pre-operation; and the commutating operation is taken as a shared operation of the first operation set and the second operation set in response to the commutating operation being the pre-operation, where the first operation set is executed before the second operation set.

As described above, the commutating operation may be a pre-operation or a post-operation and the transfer operation may be a pre-operation or a post-operation. The pre-operation and post-operation may be determined based on a pre-configured ID, and the ID includes information identifying which specific type of pre-operation or post-operation it is. For example, the transfer operation is determined by an IsMoveLabware property, and the commutating operation is determined by a Regrip property. These two properties are inherent attributes of device commands and are determined when the device is created. The pre-operation and the post-operation are determined during process building, and are edited on a pre-operation editing page and a post-operation editing page of the device node, respectively. Subsequently, the process parsing program creates sub-operations based on this information from process building. In response to a sub-operation being set as a pre-operation, IsPreAction is assigned; and in response to a sub-operation being set as a post-operation, IsPostAction is assigned.

In step S150, in response to the transfer operation and the commutating operation being pre-operations, the transfer operation and the commutating operation are taken as shared operations of two adjacent operation sets including a first operation set and a second operation set. That is, based on the grouping result of step S130, the transfer operation and the commutating operation in the second operation set are added to the first operation set, so that the transfer operation and the commutating operation belong to both the first operation set and the second operation set. Hence, the two sub-operations are considered shared operations of the two operation sets. Since the transfer operation and the commutating operation (in some cases, only transfer sub-operation is required, no commutating operation is required) serve to transfer the sample from a device corresponding to a previous primary operation to a device corresponding to a next primary operation, the transfer operation and the commutating operation can be considered as serving either the previous primary operation or the next primary operation, thus belonging to both the operation set of the previous primary operation (the first operation set) and the operation set of the next primary operation (the second operation set). In the ordered series of operations, sub-operations are ordered, sub-operations earlier in the order are executed first, and sub-operations later in the order are executed later. Therefore, the grouped operation sets are also ordered, and sub-operations within an operation set are ordered. Thus, operation sets earlier in the order are executed first, and operation sets later in the order are executed later. It can be understood that the order of an operation set is determined by the order of the sub-operations that constitute the operation set.

Exemplarily, reference is made to FIG. 3. In the embodiment corresponding to FIG. 3, since sub-operation 45 and sub-operation 46 are transfer operations between sub-operation 42 (primary operation) and sub-operation 49 (primary operation), sub-operation 45 and sub-operation 46 are shared operations, both belonging to not only the operation set to which the sub-operation 42 (primary operation) belongs but also the operation set to which the sub-operation 49 (primary operation) belongs.

In the technical solution described above, by taking into account shared operations, grouping can be more precisely, thereby effectively meeting specific requirements during the execution of a specific process.

Exemplarily, the determining, for each primary operation, every auxiliary operation corresponding to the primary operation based on the ordered series of operations, and grouping the primary operation and the auxiliary operation corresponding to the primary operation into an operation set in step S130 may include step 131, step 132, step 133 and step 134.

In step S131, an order of the primary operations in the ordered series of operations is determined based on the ordered series of operations, to obtain an ordered primary operation sequence.

In an ordered series of operations, each sub-operation is ordered, and primary operations are also sub-operations in the ordered series of operations. Therefore, the order of primary operations can be determined based on the ordered series of operations.

Exemplarily, in the embodiment corresponding to FIG. 3, the order of primary operations determined according to the ordered series of operations is sub-operation 42 (primary operation) → sub-operation 49 (primary operation), that is, the primary operation corresponding to sub-operation 42 is before the primary operation corresponding to sub-operation 49.

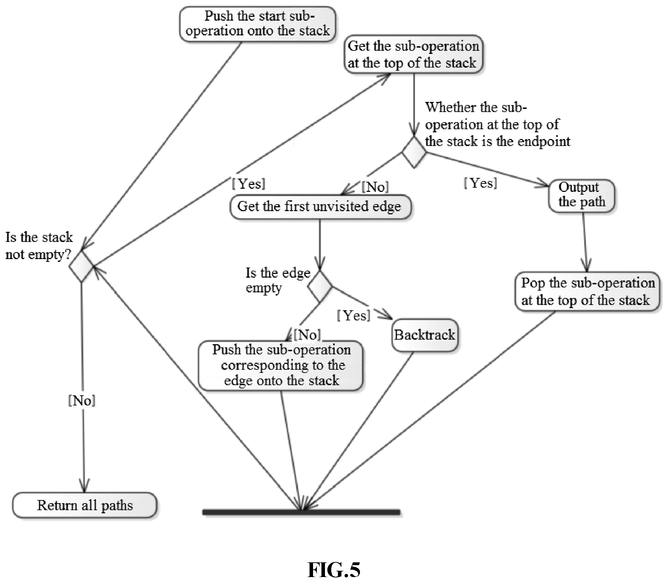

Exemplarily, reference is made to FIG. 3 and the flowchart of primary operation path calculation (that is, determining the ordered primary operation sequence) shown in the embodiment corresponding to FIG. 5. For the embodiment in FIG. 3, the ordered primary operation sequence is determined as follows. First, sub-operations that are not primary operations are deleted, and only primary operations, which are, sub-operation 42 and sub-operation 49 (sub-operation 42 → sub-operation 49) are left. A stack is created and initialized to be empty (details about the stack will be introduced later). Sub-operation 42 is pushed onto the stack, and it is determined whether the stack is empty. In response to the stack not being empty, the sub-operation at the top of the stack, which is sub-operation 42, is acquired. And then, whether the sub-operation at the top of the stack is an endpoint is determined. In response to the sub-operation at the top of the stack not being an endpoint, the first unvisited edge is acquired (which may be interpreted as acquiring the sequential relationship between this sub-operation and the next sub-operation; failing in the acquiring indicates that next sub-operation of this sub-operation is not present while a success in the acquiring indicates that next sub-operation of this sub-operation is present). In response to the edge not being empty, the sub-operation corresponding to this edge, that is, sub-operation 49, is pushed onto the stack. Whether the stack is empty is continuously to be determined. In response to the stack being not empty (stack includes sub-operations 49 and 42 from top to bottom), the sub-operation at the top of the stack, that is sub-operation 49, is acquired. It is determined whether the sub-operation 49 at the top of the stack is an endpoint. In response to sub-operation 49 not being the endpoint, the first unvisited edge is acquired again, and the loop is repeated. In response to sub-operation 49 being the endpoint, the primary operation path sub-operation 42 → sub-operation 49 is outputted.

The sub-operation 49 at the top of the stack is popped, the stack is not empty, and then the sub-operation at the top of the stack, which is sub-operation 42, is acquired. The sub-operation 42 at the top of the stack is not an endpoint, and then the first unvisited edge is to be acquired. While first unvisited edge is not present, backtracking is performed (sub-operation 42 is popped, backtracking is performed until a new edge is acquired; if no new edge is acquired until the stack is emptied, backtracking ends). Whether the stack is empty is determined again. When the stack is empty, the result is outputted. In this embodiment, there is only one path.

In step S132, by taking each of the one or more primary operations as basis, the sub-operations in the ordered series of operations are grouped to form one or more operation groups.

Exemplarily, step S132 may include step S132a.

In step S132a, based on the ordered series of operations, a sub-operation executed before a first primary operation and the first primary operation are grouped into an operation group; for two adjacent primary operations in the ordered series of operations, a sub-operation between the two adjacent primary operations and a later-executed primary operation of the two adjacent primary operations are grouped into another operation group; and a sub-operation executed after a last primary operation is grouped into yet another operation group.

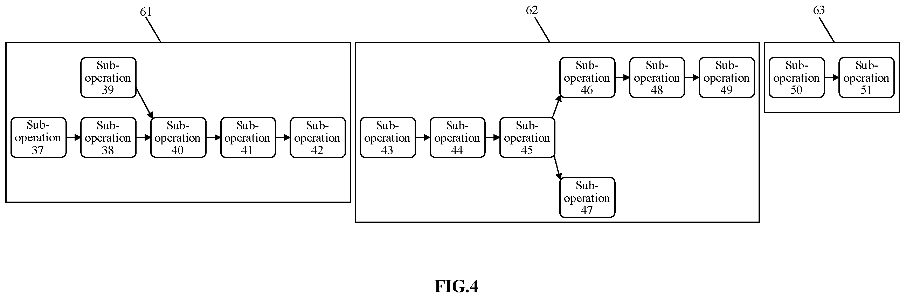

Exemplarily, an ordered series of operations may include one primary operation or multiple primary operations. In a case that the ordered series of operations includes one primary operation, all sub-operations in the ordered series are directly grouped as one operation group, which may also be considered as one operation set. In other words, for the case that there is one primary operation in the ordered series of operations, all operations in the ordered series belong to the same operation set. In a case that the ordered series of operations includes multiple primary operations, the grouping result can be viewed as three parts: one is the first operation group, one is the middle operation group(s), and one is the last operation group. The sub-operations in the first operation group include the sub-operation(s) executed before the first primary operation and the first primary operation. The middle operation group(s) includes the sub-operation(s) between two adjacent primary operations and the later-executed primary operation of the two adjacent primary operations. The last operation group includes the sub-operation(s) executed after the last primary operation. It can be understood that when the quantity of primary operations is more than 3, the quantity of middle operation groups is more than one. For example, when the quantity of primary operations is 4, the quantity of middle operation groups is two, one of which includes the sub-operation(s) between the first primary operation and the second primary operation together with the second primary operation (the second primary operation is executed later than the first primary operation), and the other of which includes the sub-operation(s) between the second primary operation and the third primary operation together with the third primary operation (the third primary operation is executed later than the second primary operation). FIG. 4 shows a grouping result based on the ordered series of operations in FIG. 3, and reference numerals 61, 62, and 63 in the figure represent the first operation group, the second operation group, and the third operation group, respectively.

In the technical solution described above, by employing step S132 to first group sub-operations in the ordered series of operations, further grouping of sub-operations in the ordered operation can be performed based on the grouping result, which can be understood as fine-tuning the grouping result of S132, thereby accurately grouping sub-operations in the ordered series of operations. In practical applications, each group is considered as a whole, thereby effectively improving the execution efficiency of the automated process.

Exemplarily, step S132a may include step S132a-1, step S132a-2, step-S132a-3 and step S132a-4.

In step S132a-1, for each primary operation in the ordered series of operations, a sequential relationship between the primary operation and a next sub-operation connected to the primary operation is deleted.

Exemplarily, the sequential relationship refers to that, in the ordered series of operations, a sub-operation has a sequential relationship with a previous sub-operation and also has a sequential relationship with a following sub-operation. For example, if the sequential relationship between a sub-operation and its following sub-operation is deleted, the order between the sub-operation and the following sub-operation is removed. Diagrams are provided to facilitate understanding. For example, as shown in FIG. 3, sequential relationships are represented by directed arrows. For sub-operation 42 (the primary operation), deleting its sequential relationship with the next sub-operation, can be interpreted as deleting the edge (arrow) starting from this primary operation 42 in FIG. 3. It can be understood that, after deleting the sequential relationship between a primary operation and its next sub-operation, the next sub-operation of the primary operation is not obtainable based on the ordered series of operations.

In step S132a-2, an initial operation number is set for each of the multiple sub-operations in the ordered series of operations, and an operation group number of a current operation group is set to an initial value.

Exemplarily, an initial operation number, such as 0, is set for each sub-operation in the ordered series of operations. Similarly, the operation group number of the current operation group is set to an initial value, for example, which may also be 0. It can be understood that the operation number serves to represent a sub-operation, while the operation group number serves to represent an operation group including one or more sub-operations. For example, sub-operations 37 to 51 in FIG. 3 may each have an initial operation number of 0. After grouping, multiple operation groups are formed, each having its own operation group number. That is, the entire sequence sub-operation 37 → sub-operation 38 (sub-operation 39) → sub-operation 40 → sub-operation 41 → sub-operation 42 in FIG. 3 may be considered as one operation group.

In step S132a-3, a stack is created and initialized to be empty.

It can be understood that a stack, also known as a pushdown stack, is a linear list with restricted operations. It is a linear list in which insertion and popping (deletion) operations are restricted to only at the end of the list. This end is called the top of the stack, and the opposite end is called the bottom of the stack. Inserting a new element into a stack is also called pushing, which places a new element on top of the current top element, making it the new top element. Popping an element from a stack refers to popping the top element and making the adjacent element of the top element to be a new top element. The element here can be interpreted as the sub-operation in the ordered series of operations.

In step S132a-4, each sub-operation in the ordered series of operations is traversed, and in response to an operation number of the current sub-operation being the initial operation number, step S132a-4a is executed.

In step S132a-4a, the operation group number of the current operation group is modified to a target value; and the current sub-operation is pushed onto the stack.

Exemplarily, in the ordered series of operations shown in FIG. 3, the first sub-operation 37 is traversed. Since the operation number of sub-operation 37 is the initial operation number (set in step S32a-2), the operation group number of the current operation group is modified to a target value, that is, the operation group number of the current operation group is modified from the initial value (such as 0) to a target value, for example, the target value is 1. Correspondingly, sub-operation 37 is pushed onto the stack. Since the stack is set to empty before sub-operation 37 is pushed, currently sub-operation 37 is at the top of the stack.

In step S132a-4, in response to the operation number of the current sub-operation being the initial operation number, the operation group number of the current operation group is modified to a target value. It should be noted that when traversing this sub-operation (which may be interpreted as the current sub-operation), the operation group number of the current operation group is modified to a target value only when the operation number of this sub-operation is the initial operation number. Based on this, there may be multiple instances where the operation group number of the current operation group is modified. It can be understood that the target value is a general concept. It is not the case that each time the operation group number of the current operation group is modified to the same value; otherwise, grouping would be meaningless. Therefore, it can be understood that each time the operation group number is modified, the target value varies. For example, when modification of the operation group number of the current operation group is required, the current operation group number may be incremented by 1. As described above, when the operation group number of the current operation group is the initial value 0, if the operation group number of the current operation group is required to be modified, the operation group number of the current operation group is incremented by 1 based on the initial value (such as 0), that is, the operation group number of the current operation group is modified to a target value 1. In an embodiment, as shown in FIG. 3 and FIG. 4, when traversing sub-operation 37, since the operation number of sub-operation 37 is the initial operation number (such as 0), the operation group number of the current operation group (in this embodiment, the operation group number of the current operation group is 0) is modified to a target value, recorded as a first target value. When traversing sub-operation 43, since the operation number of sub-operation 43 is the initial operation number (such as 0), the operation group number of the current operation group is required to be modified to a second target value. It can be understood that the first target value and the second target value are different, for example, the first target value is 1, and the second target value is 2. That is, the current operation group number is 1 when it is required to modify the operation group number of the current operation group for the second time, so the current operation group number is incremented by 1. After modification, the operation group number of the current operation group is 2.

In step S132a-4b, in response to determining that the stack is not empty, a popping step and a pushing step are executed. The popping step refers to popping a sub-operation at the top of the stack, and setting the operation number of the sub-operation to the target value in response to the operation number of the sub-operation being the initial operation number. The pushing step refers to acquiring an adjacent sub-operation of the sub-operation at the top of the stack, and pushing the adjacent sub-operation onto the stack in response to an operation number of the adjacent sub-operation being the initial operation number.

Exemplarily, a quantity of the adjacent sub-operation of a sub-operation may be one or more. In an embodiment, sub-operation 37 has only one adjacent sub-operation, that is, sub-operation 38; and sub-operation 40 has three adjacent sub-operations, which are sub-operation 39, sub-operation 38, and sub-operation 41. Sub-operation 38 has two adjacent sub-operations, which are sub-operation 37 and sub-operation 40. However, for some more complex automated processes, a sub-operation may have four, five, or even more adjacent sub-operations, which can be understood by those skilled in the art and will not be elaborated here.

Exemplarily, as described above, since sub-operation 37 is in the stack, the stack is not empty. Therefore, the popping step and pushing step are continuously executed. In an embodiment, reference is made to FIG. 3. Sub-operation 37 at the top of the stack is popped. Since the operation number of the sub-operation is the initial operation number 0, the operation number of sub-operation 37 is set to the aforementioned target value, that is, the current operation group number, which is 1. For the pushing step, the adjacent sub-operation of sub-operation 37 is acquired, which is sub-operation 38. Since the operation number of this adjacent sub-operation 38 is 0, this adjacent sub-operation 38 is pushed onto the stack. Since sub-operation 37 is already popped from the stack, the stack currently only includes sub-operation 38, and sub-operation 38 is at the top of the stack.

In step S132a-4c, whether the stack is empty is determined, and the popping step and the pushing step are repeated until it is determined that the stack is empty.

Exemplarily, as described above, since sub-operation 38 is currently in the stack, the stack is not empty. Thus, the popping step and pushing step described above are repeated. In an embodiment, reference is made to FIG. 3. The sub-operation 38 at the top of the stack is popped. Since the operation number of sub-operation 38 is the initial operation number 0, the operation number of sub-operation 38 is set to the aforementioned target value, that is, the current operation group number, which is 1. The adjacent sub-operation of sub-operation 38 is acquired, which includes, sub-operation 37 and sub-operation 40. Since the operation number of this adjacent sub-operation 40 is 0, this adjacent sub-operation 40 is pushed onto the stack. Since sub-operation 38 is already popped from the stack, the stack currently only includes sub-operation 40, and sub-operation 40 is at the top of the stack. The operation number of sub-operation 37 is 1 (already set to 1 in step S132a-4b), and is not the initial operation number, so sub-operation 37 is not required to be pushed onto the stack. Further, the stack is determined not empty, and the above popping step and pushing step are repeated until the stack is empty. It should be noted that since in previous steps, the sequential relationship between sub-operation 42 (a primary operation) and the next sub-operation (sub-operation 43) of sub-operation 42 is deleted, sub-operation 43 cannot be acquired when acquiring the adjacent sub-operation of sub-operation 42.

In an embodiment, the acquisition of adjacent sub-operations may be simultaneous or sequential. For example, a previous sub-operation of a sub-operation may be defined as a source sub-operation, and a following sub-operation of the sub-operation may be defined as a neighboring sub-operation. In this way, for sub-operation 40, the source sub-operation of sub-operation 40 may be acquired first, which includes, sub-operation 38 and sub-operation 39. Since the operation number of sub-operation 39 is the initial operation number 0, sub-operation 39 is pushed onto the stack. Under this condition, the stack only includes sub-operation 39 (sub-operation 38 is already popped) at the top. The neighboring sub-operation of sub-operation 40 is acquired continuously, that is, sub-operation 41. Since the operation number of sub-operation 41 is the initial operation number 0, sub-operation 41 is pushed onto the stack. Under this condition, the stack includes sub-operation 41 and sub-operation 39 from top to bottom. Since when sub-operation 41 is pushed onto the stack, sub-operation 39 is covered, sub-operation 41 is currently at the top of the stack. After determining that the stack is not empty, when popping the sub-operation at the top of the stack, the sub-operation 41 is popped. In the subsequent pushing step, the adjacent sub-operation 42 is acquired.

In step S132a-4d, whether the traversing is completed is determined in response to determining that the stack is empty, and in response to the traversing not being completed, a next sub-operation in the ordered series of operations is traversed until all sub-operations are grouped.

Exemplarily, as described above, after processing the six sub-operations from sub-operation 37 to sub-operation 42, the stack is empty. Under this condition, the traversal is not completed (only sub-operation 37 is traversed). Therefore, traversal goes to sub-operation 38. For sub-operation 38, step S132a-4 is returned. Since the operation number of sub-operation 38 under this condition is not the initial operation number (as known from above, the operation number of sub-operation 38 is currently 1), there is no need to continue executing steps S132a-4a to S132a-4c (the stack is still empty under this condition). Further, whether the above traversal is completed is determined, and it is determined that the traversal is not completed. Sub-operations 38 to 42 are in the same situation as sub-operation 37, and steps S132a-4a to S132a-4c (the stack is still empty under this condition) are not required for these sub-operations. Further, traversal goes to sub-operation 43. Since the operation number of sub-operation 43 is the initial operation number, steps S132a-4a to S132a-4c are executed, the operation group number of the current operation group is modified to a target value (for example, modified to 2), and sub-operation 43 is pushed onto the stack. Details of steps S132a-4a to S132a-4c are similar to those described for other steps above and will not be elaborated here.

Therefore, sub-operations in the automated process can be grouped through the method described above. For example, grouping the ordered series of operations in FIG. 3 results in: sub-operations 37, 38, 39, 40, 41, 42, whose corresponding operation numbers are all 1, thus belonging to the same operation group (first operation group, that is, a sub-operation executed before a first primary operation and the first primary operation are grouped into an operation group, where the first primary operation is 42, and in the ordered series of operations, sub-operations before this sub-operation are all executed before the primary operation 42). Sub-operations 43, 44, 45, 46, 47, 48, 49, whose corresponding operation numbers are all 2, thus belong to the same operation group (second operation group, that is, for two adjacent primary operations in the ordered series of operations, a sub-operation between the two adjacent primary operations and a later-executed primary operation of the two adjacent primary operations are grouped into another operation group, sub-operations 43 to 48 are all executed between primary operation 42 and primary operation 49, and primary operation 49 is executed after primary operation 42). It can be understood that depending on the number of primary operations, a quantity of the second operation group may be two or more. Sub-operations 50 and 51, whose corresponding operation numbers are both 3, thus belong to the same operation group (third operation group, that is, a sub-operation executed after a last primary operation is grouped into yet another operation group; the last primary operation is 49, and sub-operations executed after this primary operation are sub-operations 50 and 51).

In step S133, each operation group is traversed, and an intersection between sub-operations included in the current operation group and the ordered primary operation sequence is determined.

Each operation group in step S120 is traversed. For example, referring to FIG. 4, the first operation group 61 is traversed. The first operation group 61 includes sub-operations 37 to 42. The ordered primary operation sequence determined in step S131 is sub-operation 42 (primary operation) → sub-operation 49 (primary operation). Therefore, the intersection between the first operation group 61 and the ordered primary operation sequence includes sub-operation 42 (primary operation). When traversing the second operation group 62, this operation group 62 includes sub-operations 43 to 49. The ordered primary operation sequence determined in step S131 is sub-operation 42 (primary operation) → sub-operation 49 (primary operation). Therefore, the intersection between the second operation group 62 and the ordered primary operation sequence includes sub-operation 49 (primary operation). For the third operation group 63, the intersection between the third operation group 63 and the ordered primary operation sequence is empty.

In step S134, in response to the intersection being non-empty, whether each sub-operation in the current operation group belongs to a same operation set as a primary operation in the intersection is determined according to a position of the primary operation within the ordered primary operation sequence and a correspondence between each sub-operation in the current operation group and the primary operation, where the correspondence is a correspondence between the primary operation and the auxiliary operation.

Exemplarily, the position, within the ordered primary operation sequence, of the primary operation in the intersection includes whether this primary operation is the first primary operation in the ordered primary operation sequence. When the primary operation is the first primary operation, all sub-operations in the current operation group belong to the first operation set. When the primary operation is not the first primary operation, the operation set to which each sup-operation belongs is determined according to the correspondence between the sub-operation and the primary operation. The correspondence between the primary operation and auxiliary operation (the sub-operation other than the primary operation) is introduced above and is not elaborated here.

Exemplarily, each operation group is traversed, an intersection between sub-operations included in the operation group and the ordered primary operation sequence is determined, and in response to the intersection being empty, all sub-operations in the current operation group are determined to belong to the last operation set.

Exemplarily, when traversing an operation group, in response to the intersection between sub-operations in the operation group and the ordered primary operation sequence being empty, the entire operation group belongs to the last operation set. In the embodiment described in FIG. 4, the intersection between the third operation group 63 (sub-operations 50 and 51) and the ordered primary operation sequence (sub-operation 42, sub-operation 49) is empty. Therefore, all sub-operations (sub-operations 50 and 51) in the third operation group 63 belong to the last operation set.

In the technical solution described above, by employing a stack to group operations, sub-operations in the ordered series of operations can be accurately grouped. In practical applications, each group may be considered as a whole, thereby effectively improving the execution efficiency of the automated process.

Exemplarily, step S134 may include steps S134a and S134b.

In step S134a, it is determined that all sub-operations in the current operation group belong to the same operation set, in response to the primary operation in the intersection being the first primary operation in the ordered primary operation sequence.

Exemplarily, referring to the embodiment shown in FIG. 3 and FIG. 4, the intersection between the first operation group 61 (including sub-operations 37 to 42) and the ordered primary operation sequence (including sub-operation 42, sub-operation 49) includes sub-operation 42, which is the first primary operation. Therefore, all sub-operations in the first operation group 61 belong to the same operation set, which is the first operation set in this embodiment.

In step S134b, in response to the primary operation in the intersection not being the first primary operation in the ordered primary operation sequence, whether each sub-operation in the current operation group belongs to the same operation set as the primary operation in the intersection is determined according to the following steps S134b-1 and S134b-2.

In step S134b-1, in response to a sub-operation in the current operation group being a primary operation, it is determined that the sub-operation being the primary operation belongs to another operation set.

In step S134b-2, in response to a sub-operation in the current operation group being an auxiliary operation, it is determined whether the auxiliary operation belongs to the same operation set as the primary operation in the intersection based on a correspondence between the auxiliary operation and a previous primary operation.

Exemplarily, in step S134b-2, in response to a sub-operation in the operation group being an auxiliary operation and the auxiliary operation not belonging to the same operation set as the primary operation, it is determined whether the auxiliary operation belongs to the same operation set as a next primary operation based on a correspondence between the auxiliary operation and the next primary operation.

Reference is made to the embodiment shown in FIG. 3. For the second operation group 62 (including sub-operations 43 to 49), the intersection between this operation group and the ordered primary operation sequence (including sub-operation 42, sub-operation 49) includes sub-operation 49, which is not the first primary operation. Thus, it is required to traverse each sub-operation in the second operation group 62 to determine whether all sub-operations in the second operation group 62 belong to the first operation set or the next operation set. In an embodiment, for sub-operation 43, since this sub-operation 43 is not a primary operation but an auxiliary operation, and this sub-operation 43 is a post-operation to the previous primary operation (sub-operation 42) (the correspondence between the primary operation and the auxiliary operation), this sub-operation 43 belongs to the same operation set as the primary operation (sub-operation 42). As described above, sub-operation 42 already belongs to the first operation set (the previous operation set). Therefore, sub-operation 43 also belongs to the first operation set. Similarly, sub-operations 44 and 47 also belong to the first operation set. For sub-operation 45, since this sub-operation 45 is not a primary operation but an auxiliary operation, and this sub-operation 45 is a pre-operation of the next primary operation (sub-operation 49) (the correspondence between the primary operation and the auxiliary operation), this sub-operation 45 belongs to the same operation set as the next primary operation (sub-operation 49).

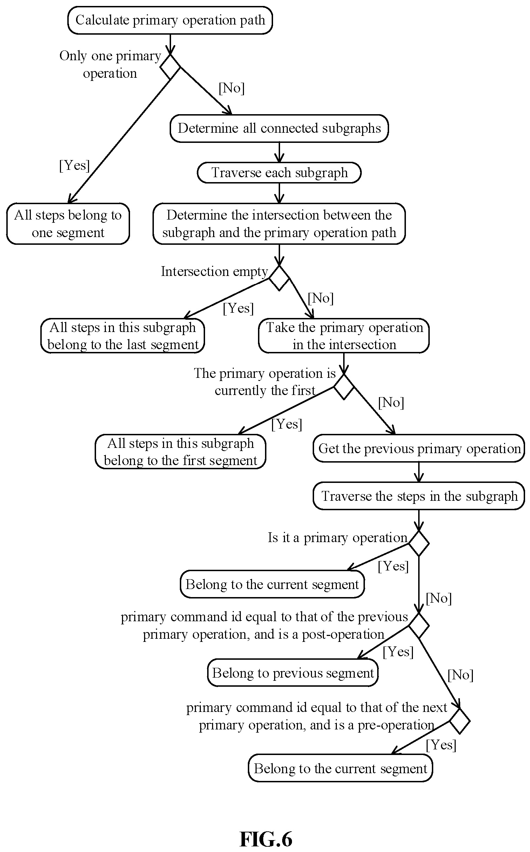

In the above technical solution, in conjunction with the logical diagram shown in FIG. 6, sub-operations can be grouped in practical application scenarios (for example, a process termination scenario). Based on this, the corresponding operation sets are considered as a whole to determine which steps need to be retained and how to create new sub-operations, thereby effectively improving processing efficiency. This technical solution may also be applied to other scenarios, such as candidate set calculation for scheduling, planning parameter construction, device allocation, resource locking, or the like. For example, the technical solution may be applied to candidate set calculation for scheduling. After a process starts running, each sub-operation is added to a to-be-scheduled list before it starts execution. When a sub-operation should be added to the to-be-scheduled list depends on dependency relationships between sub-operations and should satisfy conditions such as device resource occupancy relationships, plate position occupancy relationships, lid position occupancy relationships, and planning time. And these conditions cannot be determined merely based on a single sub-operation, so that it is required to consider the set to which the sub-operation belongs as a whole according to the present disclosure. The technical solution may be applied to planning parameter construction. During planning, not only information for each sub-operation is required, but also other information such as device resource information, plate position occupancy information, lid position occupancy information, time constraint information, or the like is required. Some information, such as information on the pre-operations and post-operations associated with a primary operation, is required to be calculated based on the present disclosure. This information is passed as parameters to the planning. The technical solution may be applied to device allocation. There may be more than one device of the same type in the system, hence the concept of device pool exists. Therefore, a certain type of device selected during process design may change during process execution based on the number of devices in the pool and the device pool usage strategy. In an embodiment, planning clarifies which device(s) is ultimately used in the first step. This process is assigning a device to each sub-operation. Since a primary operation and its associated pre-operation and post-operation generally belong to the same device, it is required to consider the so-determined set to which the primary operation and its associated pre-operations and post-operations belong as a whole. The technical solution may be applied to resource locking. A device may be considered as a resource, and several sub-operations may use the same device resource. As long as any sub-operation starts execution, its corresponding device resource enters a locked state, and other throughputs are not allowed to use that device. Moreover, due to dynamic planning caused by scenarios such as device online/offline or branch switching during process execution, it is required to determine when sub-operations of other throughputs are allowed to use the locked device based on the locked state of device resources. Therefore, in this case, it is also required to consider the operation set corresponding to the sub-operations as a whole.

Exemplarily, the start node corresponds to multiple samples. Before step S120, the method includes: determining per-sample ordered series of operations, based on the ordered series of operations. In this case, step S120 includes determining, based on the determined per-sample ordered series of operations, each primary operation in each of the per-sample ordered series of operations.

It can be understood that the above technical solution is mainly applicable to situations where multiple samples are involved in an automated process. That is, the ordered series of operations and the sample are in a correspondence relationship, and in turn the essence of the ordered series of operations is sample-related or sample-centric. For example, operations are performed for the sample regardless of the type being the primary operation, the pre-operation or the post-operation.

According to the technical solution described above, for situations where multiple samples are involved, grouping can be performed sample-centrically. According to pre-set correspondences between samples and nodes in the automated process, several ordered series of operations are acquired. For each of the several ordered series of operations, correspondence between a sample and the ordered series of operations can be determined based on connections among the multiple nodes. Thus, accurate grouping can be achieved from the sample perspective, thereby achieving efficient handling or execution of specific application scenarios, with high applicability and easy promotion.

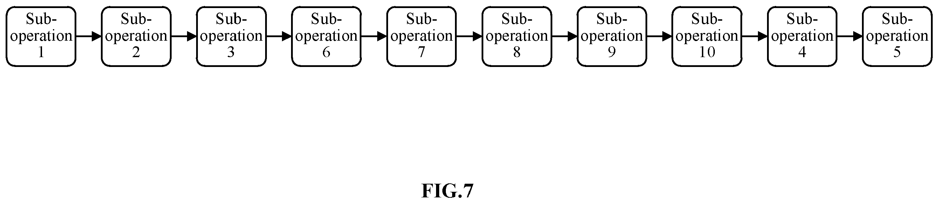

Exemplarily, for some application scenarios, the ordered series of operations may be acquired according to the connections among the multiple nodes and some special requirements arising during execution. For example, in a scenario of dynamically requesting pipette tip, a liquid workstation may lack pipette tip for liquid transfer during process execution, and an operation related to pipette tip loading needs to be inserted in this case, thereby obtaining an ordered series of operations. FIG. 7 shows a schematic diagram of an ordered series of operations acquired according to connections among the multiple nodes in another automated process according to an embodiment of the present disclosure, specifically a schematic diagram of an ordered series of operations for dynamically requesting pipette tip. The sub-operations 6 to 10 are inserted for pipette tip loading. Specifically, sub-operation 6 is within the liquid workstation for transferring an empty tray for the pipette tip out of the liquid workstation. Sub-operations 7 and 8 are robotic arm transferring the tray into the liquid workstation. Sub-operation 9 is transferring the tray for the pipette tip within the liquid workstation. Sub-operation 10 is a newly inserted primary operation (since the primary operation corresponding to sub-operation 3 cannot be performed due to lack of pipette tips, the new primary operation is required to be inserted). According to the technical solution described above, sub-operation 1, sub-operation 2 and sub-operation 3 (primary operation) belong to one operation group; sub-operation 6 to sub-operation 10 belong to a second operation group; and sub-operation 4 and sub-operation 5 belong to a third operation group. The first group, the second group, and the third operation group are separately traversed using the technical solution described above. Since sub-operation 6 is a post-operation to sub-operation 3 (primary operation), sub-operation 9 is a pre-operation to sub-operation 10 (primary operation), and sub-operations 6, 7, 8 and 9 are steps for transferring the pipette tip from sub-operation 3 (primary operation) to sub-operation 10 (primary operation), they can be regard as serving either sub-operation 3 (primary operation) or sub-operation 10 (primary operation). Therefore, sub-operations 6, 7, 8 and 9 are shared operations. Thus, sub-operations 1-3, 6, 7, 8 and 9 (7 sub-operations) belong to the same operation set, and sub-operations 4 and 10 belong to another operation set. Therefore, a shared operation may not just be a transfer operation or a commutating operation, it may be other operations. Whether a sub-operation is a shared operation depends on its relationship with a previous primary operation and a next primary operation, or depends on whether the sub-operation serves devices corresponding to two primary operations. For example, since a door opening sub-operation serves only one device corresponding to a primary operation, the door opening sub-operation is not a shared operation. While the transfer operation and the commutating operation are performed when transferring samples between two devices, namely serving devices corresponding to two primary operations, and therefore are shared operations.

The technical solution described is also applicable to special scenarios like dynamically requesting pipette tip. With the technical solution, the special scenarios can be handled quickly and effectively, and execution of corresponding processes can be controlled.

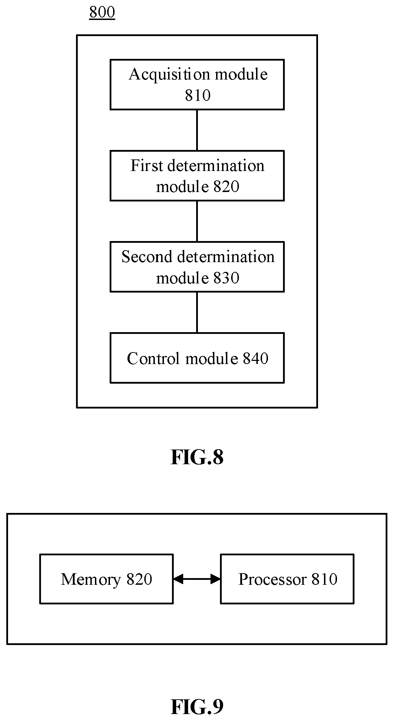

According to a second aspect of the present disclosure, an apparatus for controlling an automation process is provided. FIG. 8 shows a schematic block diagram of an apparatus 800 for controlling an automated process according to an embodiment of the present disclosure. As shown in FIG. 8, the apparatus 800 may include an acquisition module 810, a first determination module 820, a second determination module 830 and a control module 840.

The an acquisition module 810 is configured to acquire an ordered series of operations of the automated process, where the ordered series of operations is acquired according to connections among multiple nodes in the automated process, the ordered series of operations includes multiple ordered sub-operations, the multiple sub-operations are categorized into a type of primary operation and a type of auxiliary operation other than the primary operation, and the type of primary operation includes an operation that corresponds a primary function of a device corresponding to the device node.

The first determination module 820 is configured to determine each primary operation in the ordered series of operations based on the ordered series of operations.

The second determination module 830 is configured to determine, for each primary operation, every auxiliary operation corresponding to the primary operation based on the ordered series of operations, and group the primary operation and the auxiliary operation corresponding to the primary operation into an operation set, where a correspondence between the primary operation and the auxiliary operation is determined according to an attribute of a device which corresponds to the primary operation.

The control module is configured to control an execution of the automated process based on the determined one or more operation sets.

According to a third aspect of the present disclosure, an electronic device is provided. FIG. 9 shows a schematic block diagram of an electronic device 900 according to an embodiment of the present disclosure. As shown in FIG. 9, the electronic device 900 includes a processor 910 and a memory 920. Where, the memory 920 stores computer program instructions, and the computer program instructions, when executed by the processor 910, implement the method 100 for controlling an automated process described above.

According to a fourth aspect of the present disclosure, a storage medium is further provided. The storage medium stores program instructions, and the program instructions, when executed, implement the method 100 for controlling an automated process described above. The storage medium may include, for example, a storage component of a tablet computer, a hard disk of a personal computer, a read-only memory (ROM), an erasable programmable read-only memory (EPROM), a portable compact disc read-only memory (CD-ROM), a USB memory, or any combination of the above mentioned storage media. The described computer-readable storage medium may be any combination of one or more computer-readable storage media.

Those skilled in the art can understand the specific implementation schemes of the apparatus for controlling the automated process, the electronic device and the storage medium described above by reading the related description of the method for controlling the automated process described above, which are not repeated herein for the sake of brevity.

### Embodiments

Embodiment 1. A method for controlling an automated process, where the automated process comprises a start node, an intermediate node, and an end node that are sequentially connected, the start node represents a position of a sample before the automated process starts, the end node represents a position of the sample after the automated process ends, the intermediate node comprises a device node and represents a position where the sample undergoes a related operation between the start position and the end position, and the method comprises:
acquiring an ordered series of operations of the automated process, wherein the ordered series of operations is acquired according to connections among the nodes in the automated process, the ordered series of operations comprises a plurality of ordered sub-operations, the plurality of sub-operations are categorized into a type of primary operation and a type of auxiliary operation other than the primary operation, and the type of primary operation comprises an operation that corresponds a primary function of a device corresponding to the device node;
determining each primary operation in the ordered series of operations based on the ordered series of operations;
for each primary operation, determining every auxiliary operation corresponding to the primary operation based on the ordered series of operations, and grouping the primary operation and the auxiliary operation corresponding to the primary operation into an operation set, wherein a correspondence between the primary operation and the auxiliary operation is determined according to an attribute of a device which corresponds to the primary operation; and
controlling an execution of the automated process based on the determined one or more operation sets.

Embodiment 2. The method according to embodiment 1, where the type of auxiliary operation comprises a pre-operation executed before the primary operation corresponding to the auxiliary operation and a post-operation executed after the primary operation corresponding to the auxiliary operation, wherein the pre-operation or the post-operation comprises an inter-device transfer operation and/or a commutating operation for adjusting a direction of a consumable, and the consumable refers to a container for holding a sample;
in response to a quantity of the primary operation in the ordered series of operations being more than one, before the controlling an execution of the automated process based on the determined one or more operation sets, the method further comprising:
for two adjacent operation sets, determining each commutating operation and each inter-device transfer operation in a second operation set of the two adjacent operation sets; taking the commutating operation as a shared operation of a first operation set of the two adjacent operation sets and the second operation set in response to the transfer operation being the pre-operation, and taking the commutating operation as a shared operation of the first operation set and the second operation set in response to the commutating operation being the pre-operation, wherein the first operation set is executed before the second operation set.

Embodiment 3. The embodiment according to embodiment 1 or 2, where the determining, for each primary operation, every auxiliary operation corresponding to the primary operation based on the ordered series of operations, and grouping the primary operation and the auxiliary operation corresponding to the primary operation into an operation set comprises:
determining, based on the ordered series of operations, an order of one or more primary operations in the ordered series of operations to obtain an ordered primary operation sequence;
by taking each of the one or more primary operations as basis, grouping the sub-operations in the ordered series of operations to form one or more operation groups;
traversing each operation group, determining an intersection between sub-operations in a current operation group and the ordered primary operation sequence;
determining, in response to the intersection being non-empty, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation.

Embodiment 4. The method according to any one of embodiments 1-3, where the by taking each of the one or more primary operations as basis, grouping the sub-operations in the ordered series of operations to form one or more operation groups comprises:
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

Embodiment 5. The method according to any one of embodiments 1-4, where the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
deleting, for each primary operation in the ordered series of operations, a sequential relationship between the primary operation and a next sub-operation connected to the primary operation;
setting an initial operation number for each of the plurality of sub-operations in the ordered series of operations, and setting an operation group number of a current operation group to an initial value;
creating a stack and initializing the stack to be empty;
traversing each of the plurality of sub-operations in the ordered series of operations, and in response to an operation number of a current sub-operation being the initial operation number, performing:
   modifying the current operation group number to a target value; and pushing the current sub-operation onto the stack;
   executing, in response to determining that the stack is not empty, a popping step and a pushing step, wherein
      the popping step refers to: popping a sub-operation at a top of the stack, and setting the operation number of the sub-operation to the target value in response to the operation number of the sub-operation being the initial operation number; and
      the pushing step refers to: acquiring an adjacent sub-operation of the sub-operation at the top of the stack, and pushing the adjacent sub-operation onto the stack in response to an operation number of the adjacent sub-operation being the initial operation number;
      determining whether the stack is empty, and repeating the popping step and the pushing step until it is determined that the stack is empty; and
      determining, in response to determining that the stack is empty, whether the traversing is completed, and in response to the traversing not being completed, traversing a next sub-operation in the ordered series of operations until all sub-operations are grouped.

Embodiment 6. The method according to any one of embodiments 1-5, where the in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation, comprises:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
   in response to a sub-operation in the current operation group being a primary operation, determining that the sub-operation being the primary operation belongs to another operation set; and
   in response to a sub-operation in the current operation group being an auxiliary operation, determining whether the auxiliary operation belongs to the same operation set as the primary operation in the intersection based on a correspondence between the auxiliary operation and a previous primary operation.

Embodiment 7. The method according to any one of embodiments 1-6, characterized by, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

Embodiment 8. The method according to any one of embodiments 1-7, characterized by determining that all sub-operations in the current operation group belong to a last operation set in response to the intersection being empty.

Embodiment 9. The method according to any one of embodiments 1-8, where the start node corresponds to a plurality of samples, before the determining each primary operation in the ordered series of operations based on the ordered series of operations, the method comprises: determining per-sample ordered series of operations, based on the ordered series of operations; and
the determining each primary operation in the ordered series of operations based on the ordered series of operations comprises: determining, based on the determined per-sample ordered series of operations, each primary operation in each of the per-sample ordered series of operations.

Embodiment 10. The method according to any one of embodiments 1-9, characterized in, determining that all of the plurality of sub-operations in the ordered series of operations belong to the same operation set, in response to a quantity of the primary operation in the ordered series of operations being one.

Embodiment 11. An apparatus for controlling an automated process, where the automated process comprises a start node, an intermediate node, and an end node that are sequentially connected, the start node represents a position of a sample before the automated process starts, the end node represents a position of the sample after the automated process ends, the intermediate node comprises a device node and represents a position where the sample undergoes a related operation between the start position and the end position, and the apparatus comprises:
an acquisition module, configured to acquire an ordered series of operations of the automated process, wherein the ordered series of operations is acquired according to connections among multiple nodes in the automated process, the ordered series of operations comprises a plurality of ordered sub-operations, the plurality of sub-operations are categorized into a type of primary operation and a type of auxiliary operation other than the primary operation, and the type of primary operation comprises an operation that corresponds a primary function of a device corresponding to the device node;
a first determination module, configured to determine each primary operation in the ordered series of operations based on the ordered series of operations;
a second determination module, configured to determine, for each primary operation, every auxiliary operation corresponding to the primary operation based on the ordered series of operations, and group the primary operation and the auxiliary operation corresponding to the primary operation into an operation set, wherein a correspondence between the primary operation and the auxiliary operation is determined according to an attribute of a device which corresponds to the primary operation; and
a control module, configured to control an execution of the automated process based on the determined one or more operation sets.

Embodiment 12. An electronic device, comprising a processor and a memory, wherein the memory stores computer program instructions, and the computer program instructions, when executed by the processor, implement the method for controlling an automated process according to any one of embodiments 1-10.

Embodiment 13. A storage medium, where the storage medium stores program instructions, and the program instructions, when executed, implement the method for controlling an automated process according to any one of embodiments1-10.

Although example embodiments have been described with reference to the drawings herein, it should be understood that the above example embodiments are merely illustrative and are not intended to limit the scope of the present disclosure thereto. Many changes and modifications may be made by those skilled in the art without departing from the scope and spirit of the present disclosure. All such changes and modifications are intended to be included within the scope of the present disclosure as claimed in the appended claims.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Professionals can use different methods for each specific application to implement the described functions, but such implementation should not be considered beyond the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division manners in actual implementation, such as multiple units or components may be combined or integrated into another device, or some features may be neglected or not executed.

In the specification provided herein, a lot of specific details are explained. However, it may be understood that the embodiments of the present disclosure may be practiced without these specific details. In some embodiments, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification may be combined in any way. Unless otherwise expressly stated, each feature disclosed in this specification (including the claims, abstract and drawings) may be replaced by an alternative feature that provides the same, equivalent or similar purpose.

Furthermore, those skilled in the art can understand that although some embodiments described herein include certain features but not other features included in other embodiments, combinations of features of different embodiments are meant to be within the scope of the present disclosure and form different embodiments. For example, in the claims, any one of the claimed embodiments may be used in any combination.

The various component embodiments of the present disclosure may be implemented in hardware, or in software modules running on one or more processors, or in a combination thereof. Those skilled in the art will appreciate that a microprocessor or digital signal processor (DSP) may be used in practice to implement some or all of the functions of some modules in the panel detection apparatus according to embodiments of the present disclosure. The present disclosure may also be implemented as apparatus programs (for example, computer programs and computer program products) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising/comprise" does not exclude the presence of elements or steps not listed in a claim. The word "one" or "an" preceding an element does not exclude the presence of multiple of such elements. The present disclosure may be implemented by means of hardware including several different elements and by means of a suitably programmed computer. In a unit claim enumerating several devices, several of these devices may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those familiar with the art within the technical scope disclosed in the present disclosure shall fall within the protection scope of the present disclosure. The protection scope of the present disclosure shall be subject to the protection scope of the claims.

## Claims

1. A method for controlling an automated process, **characterized in that** the automated process comprises a start node, an intermediate node, and an end node that are sequentially connected, the start node represents a position of a sample before the automated process starts, the end node represents a position of the sample after the automated process ends, the intermediate node comprises a device node and represents a position where the sample undergoes a related operation between the start position and the end position, and the method comprises:
acquiring an ordered series of operations of the automated process, wherein the ordered series of operations is acquired according to connections among the nodes in the automated process, the ordered series of operations comprises a plurality of ordered sub-operations, the plurality of sub-operations are categorized into a type of primary operation and a type of auxiliary operation other than the primary operation, and the type of primary operation comprises an operation that corresponds a primary function of a device corresponding to the device node;
determining each primary operation in the ordered series of operations based on the ordered series of operations;
for each primary operation, determining every auxiliary operation corresponding to the primary operation based on the ordered series of operations, and grouping the primary operation and the auxiliary operation corresponding to the primary operation into an operation set, wherein a correspondence between the primary operation and the auxiliary operation is determined according to an attribute of a device which corresponds to the primary operation; and
controlling an execution of the automated process based on the determined one or more operation sets.

2. The method according to claim 1, **characterized in that** the type of auxiliary operation comprises a pre-operation executed before the primary operation corresponding to the auxiliary operation and a post-operation executed after the primary operation corresponding to the auxiliary operation, wherein the pre-operation or the post-operation comprises an inter-device transfer operation and/or a commutating operation for adjusting a direction of a consumable, and the consumable refers to a container for holding a sample;
in response to a quantity of the primary operation in the ordered series of operations being more than one, before the controlling an execution of the automated process based on the determined one or more operation sets, the method further comprising:
for two adjacent operation sets, determining each commutating operation and each inter-device transfer operation in a second operation set of the two adjacent operation sets; taking the commutating operation as a shared operation of a first operation set of the two adjacent operation sets and the second operation set in response to the transfer operation being the pre-operation, and taking the commutating operation as a shared operation of the first operation set and the second operation set in response to the commutating operation being the pre-operation, wherein the first operation set is executed before the second operation set.

3. The method according to claim 1 or 2, **characterized in that** the determining, for each primary operation, every auxiliary operation corresponding to the primary operation based on the ordered series of operations, and grouping the primary operation and the auxiliary operation corresponding to the primary operation into an operation set comprises:
determining, based on the ordered series of operations, an order of one or more primary operations in the ordered series of operations to obtain an ordered primary operation sequence;
by taking each of the one or more primary operations as basis, grouping the sub-operations in the ordered series of operations to form one or more operation groups;
traversing each operation group, determining an intersection between sub-operations in a current operation group and the ordered primary operation sequence;
determining, in response to the intersection being non-empty, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation.

4. The method according to claim 3, **characterized in that** the by taking each of the one or more primary operations as basis, grouping the sub-operations in the ordered series of operations to form one or more operation groups comprises:
based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group.

5. The method according to claim 4, **characterized in that** the "based on the ordered series of operations, grouping a sub-operation executed before a first primary operation and the first primary operation into an operation group; for two adjacent primary operations in the ordered series of operations, grouping a sub-operation between the two adjacent primary operations and a later-executed primary operation of the two adjacent primary operations into another operation group; and grouping a sub-operation executed after a last primary operation into yet another operation group" comprises:
deleting, for each primary operation in the ordered series of operations, a sequential relationship between the primary operation and a next sub-operation connected to the primary operation;
setting an initial operation number for each of the plurality of sub-operations in the ordered series of operations, and setting an operation group number of a current operation group to an initial value;
creating a stack and initializing the stack to be empty;
traversing each of the plurality of sub-operations in the ordered series of operations, and in response to an operation number of a current sub-operation being the initial operation number, performing:
modifying the current operation group number to a target value; and pushing the current sub-operation onto the stack;
executing, in response to determining that the stack is not empty, a popping step and a pushing step, wherein
the popping step refers to: popping a sub-operation at a top of the stack, and setting the operation number of the sub-operation to the target value in response to the operation number of the sub-operation being the initial operation number; and
the pushing step refers to: acquiring an adjacent sub-operation of the sub-operation at the top of the stack, and pushing the adjacent sub-operation onto the stack in response to an operation number of the adjacent sub-operation being the initial operation number;
determining whether the stack is empty, and repeating the popping step and the pushing step until it is determined that the stack is empty; and
determining, in response to determining that the stack is empty, whether the traversing is completed, and in response to the traversing not being completed, traversing a next sub-operation in the ordered series of operations until all sub-operations are grouped.

6. The method according to claim 3, **characterized in that** the in response to the intersection being non-empty, determining, whether each sub-operation in the current operation group belongs to a same operation set as a primary operation in the intersection according to a position of the primary operation within the ordered primary operation sequence and a correspondence between each sub-operation in the current operation group and the primary operation, wherein the correspondence is a correspondence between the primary operation and the auxiliary operation, comprises:
in response to the primary operation in the intersection being the first primary operation in the ordered primary operation sequence, determining that all sub-operations in the current operation group belong to the same operation set; and
in response to the primary operation in the intersection not being the first primary operation in the ordered primary operation sequence, determining whether each sub-operation in the current operation group belongs to the same operation set as the primary operation in the intersection by:
in response to a sub-operation in the current operation group being a primary operation, determining that the sub-operation being the primary operation belongs to another operation set; and
in response to a sub-operation in the current operation group being an auxiliary operation, determining whether the auxiliary operation belongs to the same operation set as the primary operation in the intersection based on a correspondence between the auxiliary operation and a previous primary operation.

7. The method according to claim 6, **characterized by**, in response to a sub-operation in the operation group being an auxiliary operation, and in response to the auxiliary operation not belonging to the same operation set as the primary operation in the intersection, determining whether the auxiliary operation belongs to the same operation set as a next primary operation based on a correspondence between the auxiliary operation and the next primary operation.

8. The method according to claim 3, **characterized by** determining that all sub-operations in the current operation group belong to a last operation set in response to the intersection being empty.

9. The method according to any one of claims 1 to 8, **characterized in that** the start node corresponds to a plurality of samples, before the determining each primary operation in the ordered series of operations based on the ordered series of operations, the method comprises: determining per-sample ordered series of operations, based on the ordered series of operations; and
the determining each primary operation in the ordered series of operations based on the ordered series of operations comprises: determining, based on the determined per-sample ordered series of operations, each primary operation in each of the per-sample ordered series of operations.

10. The method according to any one of claims 1 to 9, **characterized in**, determining that all of the plurality of sub-operations in the ordered series of operations belong to the same operation set, in response to a quantity of the primary operation in the ordered series of operations being one.

11. An apparatus for controlling an automated process, **characterized in that** the automated process comprises a start node, an intermediate node, and an end node that are sequentially connected, the start node represents a position of a sample before the automated process starts, the end node represents a position of the sample after the automated process ends, the intermediate node comprises a device node and represents a position where the sample undergoes a related operation between the start position and the end position, and the apparatus comprises:
an acquisition module, configured to acquire an ordered series of operations of the automated process, wherein the ordered series of operations is acquired according to connections among multiple nodes in the automated process, the ordered series of operations comprises a plurality of ordered sub-operations, the plurality of sub-operations are categorized into a type of primary operation and a type of auxiliary operation other than the primary operation, and the type of primary operation comprises an operation that corresponds a primary function of a device corresponding to the device node;
a first determination module, configured to determine each primary operation in the ordered series of operations based on the ordered series of operations;
a second determination module, configured to determine, for each primary operation, every auxiliary operation corresponding to the primary operation based on the ordered series of operations, and group the primary operation and the auxiliary operation corresponding to the primary operation into an operation set, wherein a correspondence between the primary operation and the auxiliary operation is determined according to an attribute of a device which corresponds to the primary operation; and
a control module, configured to control an execution of the automated process based on the determined one or more operation sets.

12. An electronic device, comprising a processor and a memory, wherein the memory stores computer program instructions, and the computer program instructions, when executed by the processor, implement the method for controlling an automated process according to any one of claims 1 to 10.

13. A storage medium, **characterized in that** the storage medium stores program instructions, and the program instructions, when executed, implement the method for controlling an automated process according to any one of claims 1 to 10.
